# EUROPÄISCHE PATENTSCHRIFT

(11) **EP 2 734 753 B1**
(45) Veröffentlichungstag und Bekanntmachung des Hinweises auf die Patenterteilung: **27.05.2015**
(21) Anmeldenummer: 12737703.4
(22) Anmeldetag: 30.05.2012
(51) Int. Cl.: F16J 9/06, F16J 9/20, F16J 9/26

(54) **ÖLABSTREIFRING**
OIL SCRAPER RING
SEGMENT RACLEUR

(30) Priorität: 21.07.2011 DE 102011108280; 08.03.2012 DE 102012004757
(43) Veröffentlichungstag der Anmeldung: 28.05.2014
(73) Patentinhaber: Federal-Mogul Burscheid GmbH, 51399 Burscheid (DE)
(72) Erfinder: BÄRENREUTER, Dirk, 51519 Odenthal (DE); GILLEN, Jürgen, 51371 Leverkusen (DE); MIX, Christoph, 57339 Emtebrück (DE)
(74) Vertreter: Döpp, Ludger
(86) Internationale Anmeldenummer: PCT/DE2012/000573
(87) Internationale Veröffentlichungsnummer: WO 2013/010520

(56) Entgegenhaltungen:
- EP-A1- 1 557 594
- WO-A1-2008/151589
- WO-A1-2011/040066

## Beschreibung

Die Erfindung betrifft einen Ölabstreifring, beinhaltend einen Grundkörper mit einer radial äußeren Lauffläche, einer radial inneren Umfangsfläche sowie einer oberen und einer unteren Flanke, der mindestens zwei bedarfsweise mit einer verschleißfesten Schicht versehene Laufflächenstege aufweist, die sich radial in Richtung ihres einer Gegenlauffläche zugewandten Endes, vom Grundkörper ausgehend, unter einem vorgebbaren Winkel konisch verjüngen und das freie Ende der Laufflächenstege, ausgehend von einem ölraumseitigen Bereich, in Richtung eines brennraumseitigen Bereichs zumindest partiell abgeschrägt ausgebildet sind, wobei die jeweiligen Übergangsbereiche einerseits vom abgeschrägten Bereich des Laufflächensteges in die Schenkel und andererseits von den Schenkeln in den Grundkörper gerundet ausgebildet sind.

Einen derartigen Stand der Technik beschreibt die WO 2008/151589 A1.

Der hier beschriebene Ölabstreifring beinhaltet konische Laufflächenstege sowie einen definierten Radius anstelle einer scharfen Abstreifkante. Diese Abstreifkante ist zwar schonend hinsichtlich des Verschleißes der Gegenlauffläche, beispielsweise einer Zylinderlaufbuchse, aber nicht ideal hinsichtlich der Ölabstreifwirkung.

Darüber hinaus ist durch die WO 01/53727 A1 ein Ölabstreifkolbenring bekannt geworden, der mindestens einen mit einem verschleißfesten Überzug versehenen konischen Laufsteg aufweist. Im Bereich der konischen Ebene des Laufsteges ist eine mit dem verschleißfesten Überzug versehene radiale Erhebung vorgebbarer radialer Höhe und Breite vorgesehen, wobei ein geneigt und ein zylindrisch verlaufender Abschnitt gegeben ist.

Dieser Ölabstreifring hat aufgrund seines konisch zylindrischen Laufsteges eine sehr gute Ölabstreifwirkung. Nachteilig bei diesem Ring ist, dass aufgrund des in dieser Druckschrift beschriebenen Fertigungsablaufs (Vorkontur Drehen, Beschichten, Profilschleifen und Fertigkontur erzeugen) eine scharfkantige Abstreifkante entsteht. Diese scharfe Abstreifkante in Verbindung mit der guten Ölabstreifwirkung führt in einzelnen Anwendungsfällen zu erhöhtem Verschleiß der Gegenlauffläche, beispielsweise einer Zylinderlaufbuchse.

Der Erfindung liegt die Aufgabe zugrunde, einen Ölabstreifkolbenring weiter zu entwickeln, der ähnlich gute Ölabstreifwirkungen hat, wie der dem Stand der Technik zugehörige Ölabstreifring gemäß WO 01/53727 A1, gleichzeitig aber den Verschleiß der Gegenlauffläche, beispielsweise einer Zylinderlaufbuchse, reduziert.

Diese Aufgabe wird dadurch gelöst, dass der abgeschrägte Bereich des Laufflächensteges mit einem sich in Richtung des ölraumseitigen Bereichs erstreckenden zylindrisch verlaufenden Abschnitt in Wirkverbindung steht, der Radius, einer im zylindrischen Abschnitt gegebenen Abstreifkanten 0,02 bis 0,2 mm beträgt und der Flankenwinkel ≤ 18° ist und die Breite des jeweiligen zylindrischen Abschnitts < 0,15 mm beträgt.

Vorteilhafte Weiterbildungen des Erfindungsgegenstandes sind den Unteransprüchen zu entnehmen.

Die vorgeschlagene Lösung zeigt einen Ölabstreifring mit konisch zylindrischer Lauffläche im Bereich der Laufflächenstege sowie einer Abstreifkante mit einem Radius von 0,02 bis 0,2 mm, insbesondere von 0,02 bis 0,05 mm. Er stellt somit einen Kompromiss zwischen den beiden eingangs beschriebenen Ölabstreifringen dar.

Des Weiteren können Flankenwinkel ≤ 15°, insbesondere zwischen 5 und 15° von Vorteil sein.

Von weiterem Vorteil kann es sein, wenn die axiale Höhe des Grundkörpers ≥ 1,2 mm, insbesondere ≥ 1,5 mm beträgt.

Im Gegensatz zum aus dem Stand der Technik bekannten Ölabstreifring kann die Breite des zylindrischen Anteils des Laufstegs reduziert werden. Dies wiederum ist vorteilhaft, da sich mit geringerer Tangentialkraft die gleiche Flächenpressung realisieren lässt wie beim heutigen Ölabstreifkolbenring, wodurch eine geringere Reibleistung erzielt wird, die mit einem ebenfalls reduzierten Co2-Ausstoß einhergeht.

Da die Kontur des neu vorgeschlagenen Ölabstreifrings vor dem Beschichten komplett gedreht wird, kann die Flanke der Laufstege steiler werden, als beim heutigen Ölabstreifring mittels Profilschleifen. Somit sind Ölabstreifringe mit sehr geringer axialer Bauhöhe (≥ 1,2 mm) möglich. Die Art der Herstellung des Kolbenrings ist jedoch auch für Ölabstreifringe mit heute üblichen axialen Höhen einsetzbar. Bedingt durch den geringen Radius der Abstreifkante ist ein optimaler Schutz der Gegenlauffläche, insbesondere einer Zylinderlaufbuchse gegeben.

Durch den vorgeschlagenen Flankenwinkel kann der Ölverbrauch optimiert werden.

Die geringere Breite des zylindrischen Laufsteganteils wirkt reibungsverringernd.

In Folge der sehr geringen axialen Höhe kann die Bauhöhe des Kolbens ebenfalls reduziert werden, womit ein geringeres Gewicht verbunden ist.

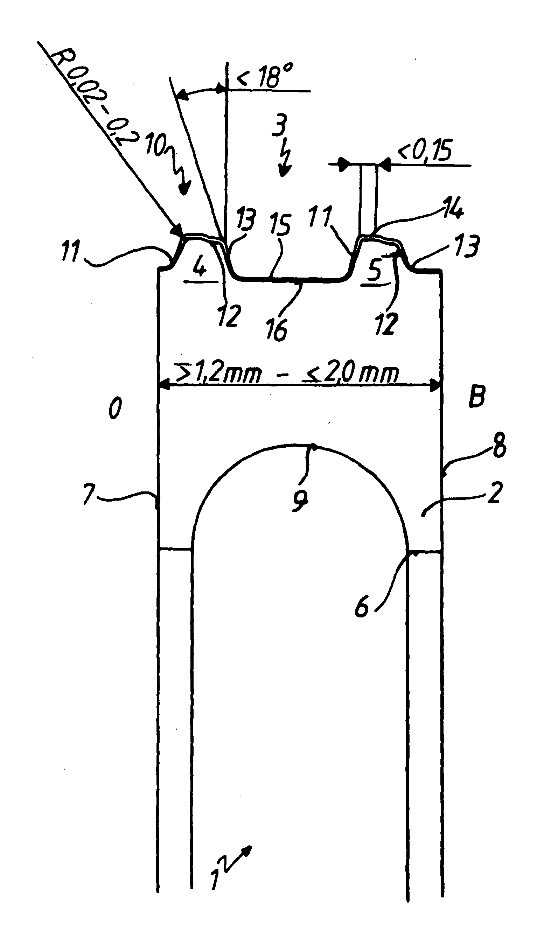

Der Erfindungsgegenstand ist anhand eines Ausführungsbeispiels in der Zeichnung dargestellt und wird wie folgt beschrieben.

Die einzige Figur zeigt einen Ölabstreifring 1 mit einem Grundkörper 2, der eine radial äußere Lauffläche 3 aufweist. Vom Grundkörper 2 ausgehend, erstrecken sich radial nach außen Laufflächenstege 4,5. Der Grundkörper 2 beinhaltet des Weiteren eine innere Umfangsfläche 6 sowie eine untere 7 und eine obere Flanke 8. Die untere Flanke 7 ist einem ölraumseitigen Bereich O und die Flanke 8 ist einem brennraumseitigen Bereich B zugeordnet. Im Bereich der inneren Umfangsfläche 6 ist eine umlaufende Nut 9 zur Aufnahme eines nicht weiter dargestellten Federrings eingebracht. Die Laufflächenstege 4,5 verjüngen sich radial in Richtung ihres einer nicht weiter dargestellten Gegenlauffläche zugewandten Endes 10, vom Grundkörper 2 ausgehend, unter einem Flankenwinkel < 18°, Schenkel 11,13 bildend, konisch verjüngen, wobei das freie Ende 10 der Laufflächenstege 4,5, ausgehend vom ölraumseitigen Bereich O in Richtung des brennraumseitigen Bereichs B, mit einer Abschrägung 12 versehen ist. In Richtung des ölraumseitigen Bereichs O schließt sich an den abgeschrägten Bereich 12 ein zylindrisch verlaufender Abschnitt 14 an, der eine Breite < 0,15 mm aufweist. Je nach Einsatz des Ölabstreifrings 1 kann die axiale Bauhöhe des Kolbenrings jedes gewünschte Maß ≥ 1,2 mm betragen. Ölraumseitig geht der zylindrische Abschnitt 14 in den zugehörigen Schenkel 11 mit einem Radius zwischen 0,02 und 0,2 mm, bevorzugt 0,02 bis 0,05 mm, über.

Die Laufflächenstege 4,5 sind in diesem Beispiel mit mindestens einer verschleißfesten Schicht 15 versehen, die beispielsweise eine DLC-Verschleißschutzschicht (Diamond-Like-Carbon) sein kann. Die Schichtdicke der jeweiligen Verschleißschutzschicht 15 kann bis max. 20 µm betragen und ist nicht nur auf der äußeren Umfangsfläche der Laufflächenstege 4,5, sondern auch auf den Flanken 11,13 der Laufflächenstege 4,5 sowie dem Nutgrund 16 neben den Laufflächenstegen 4,5 vorgesehen.

## Patentansprüche

1. Ölabstreifring, beinhaltend einen Grundkörper (2) mit einer radial äußeren Lauffläche (3), einer radial inneren Umfangsfläche (6) sowie einer oberen (8) und einer unteren Flanke (7), der mindestens zwei, bedarfsweise mit einer verschleißfesten Schicht (15) versehene Laufflächenstege (4,5) aufweist, die sich radial in Richtung ihres einer Gegenlauffläche zugewandten Endes (10) vom Grundkörper (2) ausgehend, unter einem vorgebbaren Flankenwinkel, Schenkel (11,13) bildend, konisch verjüngen und das freie Ende (10) der Laufflächenstege (4,5), ausgehend von einem ölraumseitigen Bereich (0) in Richtung eines brennraumseitigen Bereichs (8), zumindest partiell abgeschrägt ausgebildet ist, wobei die jeweiligen Übergangsbereiche einerseits vom abgeschrägten Bereich (12) des Laufflächensteges (4,5) in die Schenkel (11,13) und andererseits von den Schenkeln (11,13) in den Grundkörper (2) gerundet ausgebildet sind, **dadurch gekennzeichnet, dass** der abgeschrägte Bereich (12) des Laufflächensteges (4,5) mit einem sich in Richtung des ölraumseitigen Bereich (O) erstreckenden zylindrisch verlaufenden Abschnitt (14) in Wirkverbindung steht, der Radius (R) einer im zylindrischen Abschnitt (14) gegebenen Abstreifkante 0,02 bis 0,2 mm beträgt und der Flankenwinkel ≤ 18° ist, die Breite des jeweiligen zylindrischen Abschnitts (14) < 0,15 mm beträgt.

2. Ölabstreifring nach Anspruch 1, **dadurch gekennzeichnet, dass** der Radius (R) der Abstreifkante 0,02 bis 0,05 mm beträgt.

3. Ölabstreifring nach Anspruch 1 oder 2, **dadurch gekennzeichnet, dass** der Flankenwinkel ≤ 15° beträgt.

4. Ölabstreifring nach einem der Ansprüche 1 bis 3, **dadurch gekennzeichnet, dass** der Flankenwinkel zwischen 5 und 15° liegt.

5. Ölabstreifring nach einem der Ansprüche 1 bis 4, **dadurch gekennzeichnet, dass** die Breite des zylindrischen Abschnitts (14) zwischen 0,03 und < 0,15 mm beträgt.

6. Ölabstreifring nach einem der Ansprüche 1 bis 5, **dadurch gekennzeichnet, dass** die axiale Höhe des Grundkörpers ≥ 1,2 mm beträgt.

7. Ölabstreifring nach Anspruch 6, **dadurch gekennzeichnet, dass** die axiale Höhe des Grundkörpers ≥ 1,5 mm beträgt.

8. Ölabstreifring nach Anspruch 6 oder 7, **dadurch gekennzeichnet, dass** die axiale Höhe des Grundkörpers ≥ 1,2 mm bis ≤ 2,0 mm beträgt.

9. Ölabstreifring nach einem der Ansprüche 1 bis 8, **dadurch gekennzeichnet, dass** die Lauffläche (3), insbesondere die Laufflächenstege (4,5), mit einer verschleißfesten Schicht (15)versehen ist.

10. Ölabstreifring nach einem der Ansprüche 1 bis 9, **dadurch gekennzeichnet, dass** die verschleißfeste Schicht (15) durch mindestens eine CVD- oder PVD-Verschleißschutzschicht gebildet ist.

11. Ölabstreifring nach einem der Ansprüche 1 bis 10, **dadurch gekennzeichnet, dass** die Schichtdicke der jeweiligen Verschleißschutzschicht (15) bis zu 20 µm beträgt.

12. Ölabstreifring nach einem der Ansprüche 1 bis 11, **dadurch gekennzeichnet, dass** die Verschleißschutzschicht (15) außer auf der äußeren Umfangsfläche der Laufflächenstege (4,5) auch auf den Flanken (11,13) der Laufstege (4,5) sowie dem Nutgrund (16) neben den Laufflächenstegen (4,5) vorgesehen ist.

## Claims

1. An oil scraper ring comprising a base body (2) having a radial outer bearing surface (3), a radial inner circumferential surface (6) as well as an upper (8) and a lower flank (7), which base body comprises at least two bearing surface webs (4, 5), which are, if needed, provided with a wear-resistant layer (15), and which radially and conically taper from the base body (2) in the direction of their end (10) that faces a counter-bearing surface under a pre-determinable flank angle while forming legs (11, 13) and the free end (10) of the bearing surface webs (4, 5) is at least partially beveled from an area on the side of the oil chamber (O) in the direction of an area on the side of the combustion chamber (8), wherein the respective transition areas from the beveled area (12) of the bearing surface web (4, 5) into the legs (11, 13), on the one hand, and from the legs (11, 13) into the base body (2), on the other hand, are rounded, **characterized in that** the beveled area (12) of the bearing surface web (4, 5) is actively related to a cylindrical section (14) which extends into the direction of the area on the side of the oil chamber (O), the radius (R) of a stripping edge present in the cylindrical section (14) is comprised between 0.02 and 0.2 mm and the flank angle is ≤ 18°, and the width of the respective cylindrical section (14) is < 0.15 mm.

2. An oil scraper ring according to claim 1, **characterized in that** the radius (R) of the stripping edge is comprised between 0.02 and 0.05 mm.

3. An oil scraper ring according to claim 1 or 2, **characterized in that** the flank angle is ≤ 15°.

4. An oil scraper ring according to one of the claims 1 through 3, **characterized in that** the flank angle is comprised between 5 and 15°.

5. An oil scraper ring according to one of the claims 1 through 4, **characterized in that** the width of the cylindrical section (14) is comprised between 0.03 and < 0.15 mm.

6. An oil scraper ring according to one of the claims 1 through 5, **characterized in that** the axial height of the base body is ≥ 1.2 mm.

7. An oil scraper ring according to claim 6, **characterized in that** the axial height of the base body is ≥ 1.5 mm.

8. An oil scraper ring according to claim 6 or 7, **characterized in that** the axial height of the base body is comprised between ≥ 1.2 mm and ≤ 2.0 mm.

9. An oil scraper ring according to one of the claims 1 through 8, **characterized in that** the bearing surface (3), especially the bearing surface webs (4, 5) are provided with a wear-resistant layer (15).

10. An oil scraper ring according to one of the claims 1 through 9, **characterized in that** the wear-resistant layer (15) is formed by at least one CVD or PVD wear protection layer.

11. An oil scraper ring according to one of the claims 1 through 10, **characterized in that** the layer thickness of the respective wear protection layer (15) is up to 20 µm.

12. An oil scraper ring according to one of the claims 1 through 11, **characterized in that** the wear protection layer (15) is not only provided on the outer circumferential surface of the bearing surface webs (4, 5), but also on the flanks (11, 13) of the bearing webs (4, 5) as well as on the groove base (16) next to the bearing surface webs (4, 5).

## Revendications

1. Segment racleur d'huile comprenant un corps de base (2) ayant une surface de glissement radiale extérieure (3), une surface circonférentielle radiale intérieure (6) ainsi qu'un flanc supérieur (8) et un flanc inférieur (7), lequel corps de base comprend au moins deux entretoises de surface de glissement (4, 5) munies, en cas de besoin, d'une couche résistante à l'usure (15) et s'effilant de manière conique et radialement à partir du corps de base (2) dans la direction de leur extrémité (10), qui fait face à une contre-surface de glissement, sous un angle de flanc pré-définissable en formant des branches (11, 13) et l'extrémité libre (10) des entretoises de surface de glissement (4, 5) est au moins partiellement biseautée à partir d'une zone du côté de la chambre d'huile (O) dans la direction d'une zone du côté de la chambre de combustion (8), les zones de transition respectives de la zone biseautée (12) de l'entretoise de surface de glissement (4, 5) dans les branches (11, 13), d'une part, et des branches (11, 13) dans le corps de base (2), d'autre part, étant arrondies, **caractérisé en ce que** la zone biseautée (12) de l'entretoise de surface de glissement (4, 5) est activement reliée à une section cylindrique (14) qui s'étend dans la direction de la zone du côté de la chambre d'huile (O), le rayon (R) d'une arête de raclage se trouvant dans la section cylindrique (14) est compris entre 0,02 et 0,2 mm et l'angle de flanc est ≤ 18° et la largeur de la section cylindrique respective (14) est ≤ 0,15 mm.

2. Segment racleur d'huile selon la revendication 1, **caractérisé en ce que** le rayon (R) de l'arête de raclage est compris entre 0,02 et 0,05 mm.

3. Segment racleur d'huile selon la revendication 1 ou la revendication 2, **caractérisé en ce que** l'angle de flanc est ≤ 15°.

4. Segment racleur d'huile selon l'une des revendications 1 à 3, **caractérisé en ce que** l'angle de flanc est compris entre 5 et 15°.

5. Segment racleur d'huile selon l'une des revendications 1 à 4, **caractérisé en ce que** la largeur de la section cylindrique (14) est comprise entre 0,03 et < 0,15 mm.

6. Segment racleur d'huile selon l'une des revendications 1 à 5, **caractérisé en ce que** la hauteur axiale du corps de base est ≥ 1,2 mm.

7. Segment racleur d'huile selon la revendication 6, **caractérisé en ce que** la hauteur axiale du corps de base est ≥ 1,5 mm.

8. Segment racleur d'huile selon la revendication 6 ou la revendication 7, **caractérisé en ce que** la hauteur axiale du corps de base est comprise entre ≥ 1,2 mm et ≤ 2,0 mm.

9. Segment racleur d'huile selon l'une des revendications 1 à 8, **caractérisé en ce que** la surface de glissement (3), notamment les entretoises de surface de glissement (4, 5) sont munies d'une couche résistante à l'usure (15).

10. Segment racleur d'huile selon l'une des revendications 1 à 9, **caractérisé en ce que** la couche résistante à l'usure (15) est formée par au moins une couche de protection contre l'usure en CVD ou en PVD.

11. Segment racleur d'huile selon l'une des revendications 1 à 10, **caractérisé en ce que** l'épaisseur de couche de la couche de protection contre l'usure respective (15) est jusqu'à 20 µm.

12. Segment racleur d'huile selon l'une des revendications 1 à 11, **caractérisé en ce que** la couche de protection contre l'usure (15) n'est pas seulement prévue sur la surface circonférentielle extérieure des entretoises de surface de glissement (4, 5), mais aussi sur les flancs (11, 13) des entretoises de surface de glissement (4, 5) ainsi que sur le fond de la rainure à côté des entretoises de surface de glissement (4, 5).
